# EUROPEAN PATENT APPLICATION

(11) **EP 3 892 229 A1**
(43) Date of publication of application: **13.10.2021**
(21) Application number: 19892494.6
(22) Date of filing: 25.11.2019
(51) Int. Cl.: A61C 7/12

(54) **METHOD FOR THE ORTHODONTIC TREATMENT OF DENTAL AND MAXILLOFACIAL ANOMALIES USING BRACES**

(30) Priority: 04.12.2018 RU 2018142838
(71) Applicant: Obschestvo S Ogranichennoi Otvetsvennost'Yu "Bionik", Moscow, 121099 (RU)
(72) Inventor: NABIEV, Nabi Vagubovich, Moskovskaya obl., 140160 (RU); KLIMOVA, Tatiana Vitalievna, Moscow, 121108 (RU); RUSANOVA, Anna Georgievna, Moscow, 121108 (RU); CESARETTI, Gianfranco, 60022 (IT)
(74) Representative: Barker Brettell LLP
(86) International application number: PCT/RU2019/000847
(87) International publication number: WO 2020/117095

(57) **Abstract**

The invention refers to medicine, namely orthodontic dentistry, and is intended for the treatment of dentofacial abnormalities for mass outpatient reception in dental rooms. The patient is examined using X-ray diagnostic measures: orthopantomography (OPTG), teleroentgenography (TRG), computer tomography (CT); the choice of a treatment strategy depends on the orthodontic pathology. Then the number of braces is determined taking into account the size of the slot and the shape of the orthodontic arc. After that, braces are pre-fixed on dental rows of the patient followed by the installation of the orthodontic arc. In this case, the arc originally installed in the brace slot is four-sided, the arc can have both square and rectangular section depending on the analysis of OPTG, TRG, and CT. An obligatory condition for installation of the four-sided arc at the beginning of orthodontic treatment is associated with compliance with the specified arc load exerted on the moving teeth. At the same time, the arc originally installed in the brace slot is four-sided in compliance with the specified load of the arc, which should be equal to and not exceed 80 grams per tooth. In the case of light or medium crowding of teeth, where space deficit is from 2 to 6 mm, the original arc with a rectangular section 0.016×0.022" and a load of 80 grams/tooth is used. In the case of severe and very severe crowding of teeth, the original arc with a square section 0.016×0.016" with a load of 80 grams/tooth is used, while during the first month, the arc is fixed in brace slots by elastic ligatures with subsequent replacement of elastic ligatures to metal. The first arc change is made only after 7-9 months followed by an increase in the arc section from 0.018×0.018 to 0.021×0.028 and an increase in the load from 100 to 300 grams depending on the severity of the pathology of the result achieved during this period. The method allows improving the effectiveness and quality of orthodontic treatment, reducing the time of treatment, preventing all sorts of complications during orthodontic treatment associated with an uncontrolled load applied to the teeth during their movement on non-removable orthodontic equipment (braces). 2 dependent claims, 10 figs

## Description

### Technology

The method of orthodontic treatment of dentofacial abnormalities using braces refers to medicine, to the area of dentistry, namely to orthodontics, includes the normalization of the teeth position, the shape of dental rows, and occlusion (teeth joining), and is designed for the treatment of dentofacial abnormalities for mass outpatient reception in dental rooms, polyclinics, and clinics.

### Prior art

There is a known method of orthodontic treatment of dentofacial abnormalities with a brace system, which includes diagnostics of anomalies of the upper and lower jaws, then the determination of the position of teeth in the upper and lower jaws, followed by the installation of braces and activation of braces once a month, followed by a three-phase leveling of use of the nickel-titanium alloy arc with a round (0.014) and square section (0.016×0.016). At the same time, the third phase of leveling is accompanied by a four-time installation of orthodontic arcs of different parameters for each jaw during 12.5 months for the lower jaw and 13.5 months for the upper jaw [1].

The disadvantage of this invention is the impossibility to determine the position of teeth or any particular tooth in the sagittal and vertical plane, which at the initial stage (before treatment) does not allow obtaining objective data on dental system abnormalities and choosing appropriate treatment tactics. In the absence of initially objective data, it is also impossible to objectively assess the results of orthodontic treatment. A monthly change of orthodontic arcs adversely affects the treatment process and creates additional difficulties for the patient. Also, this treatment method does not allow controlling the vestibulooral dental inclination from the start.

There is a known method (taken as a prototype) of orthodontic treatment of dentofacial abnormalities using braces with a consistent change of vestibular nitinol arcs with round, square, and rectangular sections, installed in the slots at the beginning of treatment. These slots are fixed on the vestibular surface of teeth in the upper and lower jaws. The method of orthodontic treatment using a sequential change of vestibular NiTi arcs for the brace slot 0.022" includes several stages, namely: the stage of leveling: vertical and horizontal alignment of teeth. The necessary properties of arcs: weak load, plasticity, and low friction. For these purposes, a consistent change of arcs with a round section is used (exception of any size is acceptable, depending on the clinical situation): 0.012", 0.014", 0.016". The intermediate stage: alignment of the occlusion plane, rotation of teeth, beginning of angulation development, beginning of torque development (vestibulooral dental inclination). The necessary properties of arcs: medium strength, average plasticity, and low friction. For these purposes, a consistent change of arcs of round, square and rectangular sections is used (exception of any size is acceptable depending on the clinical situation): 0.018", 0.016×0.016", 0.018×0.018", 0.020×0.020", 0.016×0.022", 0.017×0.025". The final stage includes closing gaps, improving intercuspal positions, development of angulation and torque, and retention. The necessary properties of arcs: medium strength, high plasticity, and low friction. For these purposes, rectangular-section arcs are used (exception of any size is acceptable depending on the clinical situation): 0.016×0.022", 0.017×0.025", 0.019×0.025" [2].

This method has a number of drawbacks: during the leveling stage at the beginning of orthodontic treatment, installation of round-section arcs in brace slots promotes the alignment of teeth in dental rows, but it is impossible to control teeth moving in the vestibulooral direction (torque) and mesiodistal (angulation) direction. The so-called "loss of torque" (e.g., excessive protrusion of the frontal teeth group resulting from crowding) is one of the most undesirable complications of orthodontic treatment and requires sufficient skills to eliminate it. Other disadvantages include indefinite extending of treatment in the case of "torque loss" during the use of round-section arcs, and the need to remove complete teeth (premolars) to avoid "torque loss".

The use of excessive load for moving teeth in orthodontics is unacceptable for many reasons: first of all, it is a delay in tooth movement, loss of support, discomfort, increased mobility of teeth, root resorption. However, almost all manufacturers do not mark produced arcs with the load on the tooth in grams, so the practitioner works empirically, analyzing the developed loads based on clinical evidence and focusing on the patient's complaints when activating the orthodontic apparatus (teeth pain), the condition of the gum mucosa in the area of moving teeth (hyperemia), teeth mobility. This is unacceptable. Resorption of teeth roots is a very serious complication. As a rule, it occurs only if pressure on teeth and the applied load of the arc are too great (medical error). Such a tooth will have to be removed in the future. At the same time, almost all manufacturers do not mark produced arcs with the load on the tooth in grams, so the practitioner works empirically, analyzing the developed loads based on clinical evidence and focusing on patient's complaints when activating orthodontic apparatus (teeth pain), the condition of the gum mucosa in the area of moving teeth (hyperemia), teeth mobility. This is unacceptable. Resorption of teeth roots is a very serious complication. As a rule, it occurs only if pressure on teeth and the applied load of the arc are too great (medical error). Such a tooth will have to be removed in the future. Uncontrolled movement of teeth and application of excessive loads can lead to the dehiscence of alveolar bone, which causes recession, catarrhal gingivitis, periodontitis, and formation of tooth pockets. The movement of teeth during orthodontic treatment using uncontrolled load leads to the thinning of the vestibular gum and alveolar bone. This is the most common complication of orthodontic treatment. Another possible complication is the detachment of the vascular-nervous beam of the tooth. This can result in periodontitis in the case of asymptomatic course. The detachment of the beam happens when the orthodontist makes a mistake: for example, a tooth moves too actively, an excessively high load is applied to it, inadequate pulls are used, etc.

### Disclosure of the invention

This invention is aimed at elimination of uncontrolled teeth movement caused by the installation of the circular arc, which manifests itself as protrusion of teeth of the upper and lower jaws; control of torque and angulation of teeth from the first day of treatment; improvement of treatment efficacy and prevention of complications such as gum recession, root resorption, rupture of the neurovascular beam in the tooth, etc. resulting from uncontrolled arc load; reducing the friction of the arc in brace slots due to the unique physical and mechanical properties of the arc alloy; correction of pathological occlusion due to the correct distribution of load during treatment and movement of teeth to the correct position.

The technical result of the invention is the improved effectiveness and quality of orthodontic treatment, reduction of the time of treatment, prevention of all sorts of complications associated with an uncontrolled load applied to the teeth during their movement on the non-removable orthodontic equipment (braces); reduced duration of orthodontic treatment of abnormalities in the position of individual teeth and the overall economic effect by reducing the cost of treatment compared to the known way; ensuring of adequate load applied to the teeth; no monthly arc change.

This goal is achieved through the following facts. The method of orthodontic treatment of dentofacial abnormalities using braces begins with an examination of the patient and the choice of a treatment strategy depending on the severity of orthodontic pathology using vestibular nitinol arcs with a square or rectangular section of a certain size that are installed in the brace slots. They are fixed on the vestibular surface of teeth in the upper and/or lower jaws. This method includes the stages of leveling and vertical and horizontal alignment of teeth. The choice of a treatment strategy depending on the severity of orthodontic pathology is based on the analysis of orthopantomography (OPTG), teleroentgenography (TRG), and computer tomography (CT). It determines the number of braces taking into account the size of the slot and the shape of the orthodontic arc. Then braces are pre-installed and fixed on the patient's dental rows followed by the installation of the orthodontic arc. The arc originally installed in the brace slot is four-sided in compliance with the specified load of the arc, which should be equal to and not exceed 80 grams per tooth. In the case of light or medium crowding of teeth, where space deficit is from 2 to 6 mm, the original arc with a rectangular section 0.016×0.022" and a load of 80 grams/tooth is used. In the case of severe and very severe crowding of teeth, the original arc with a square section 0.016×0.016" with a load of 80 grams/tooth is used, while during the first month, the arc is fixed in brace slots by elastic ligatures with subsequent replacement of elastic ligatures to metal. The first arc change is made only after 7-9 months followed by an increase in the arc section from 0.018×0.018 to 0.021×0.028 and an increase in the load from 100 to 300 grams depending on the severity of the pathology.

The teeth surface is etched before fixation of the braces on dental rows through the application of 37% solution of orthophosphoric acid on the vestibular surface of teeth and the place intended for fixation of the braces with exposure of 20-40 seconds.

After installation and fixation of the braces on dental rows of the patient, it is necessary to remove the residues of fixing material with a tool and illuminate each brace for 40 seconds using a polymerizing lamp.

### Summary of drawings

Fig.1 shows the patient's oral cavity in three projections before treatment;
Fig. 2 shows a plaster model of the patient in three projections before treatment;
Fig.3 - orthopantomography of the patient;
Fig. 4 - teleroentgenography of the head in lateral projection;
Fig. 5 - braces and the four-sided arc with a weak load;
Fig. 6 - treatment result after 1 month;
Fig. 7 - fixation of braces and installation of the four-sided arc with a weak load on the lower jaw;
Fig. 8 - treatment result after 9 months;
Fig. 9 - end of active orthodontic treatment;
Fig. 10 - control orthopantomography after orthodontic treatment.

### Best mode for carrying out the invention

The method of orthodontic treatment of dentofacial abnormalities using braces begins with an examination of the patient using X-ray diagnostic measures: orthopantomography (OPTG), teleroentgenography (TRG), computer tomography (CT), analysis of OPTG, TRG, CT and the choice of a treatment strategy depending on the orthodontic pathology. Then the number of braces is determined taking into account the size of the slot and the shape of the orthodontic arc.

After that, braces are pre-fixed on dental rows of the patient followed by subsequent installation of the orthodontic arc. The arc that is initially installed in the slot is four-sided. The installed arc can have both a square and rectangular section depending on the analysis of OPTG, TNG, and CT. An obligatory condition for the installation of the four-sided arc at the beginning of orthodontic treatment is associated with compliance with the specified arc load exerted on the moving teeth. The arc load should be equal to and not exceed 80 grams per tooth. This condition can be fulfilled, for example, using arcs from BIO-EDGE GC that are marked with the load value.

The choice of the arc section, square or rectangular, depends on the degree of teeth crowding. In the case of light and medium crowding, when space deficit is 2 to 6 mm, the original arc with a rectangular section 0.016×0.022" with a load of 80 grams/tooth is used.

In the case of severe and very severe crowding, when the space deficit is 7 to 10 mm, the original arc with a square section 0.016×0.016" with a load of 80 grams/tooth is used.

The ligation (binding) and fixation of the arc in brace slots is first carried out by elastic ligatures with subsequent replacement of elastic ligatures with metal to enhance sliding of the arc and reduce the friction of the arc in the brace slot.

The patient's control check-ups should be carried out once a month, with the first change of arc to be performed only after 7-9 months. Then the arc section should be enlarged (from 0.018×0.18 to 0.021×0.28), as well as its load on the teeth (from 100 to 300 grams) depending on the severity of the pathology, treatment stage, and the result achieved at this treatment stage.

Braces are removed in a standard way with the subsequent manufacture of retention devices. With this method, it is possible to control vestibulooral teeth inclination from the very beginning of treatment.

Implementation of orthodontic treatment of dentofacial abnormalities using braces begins with a patient interview and filling out questionnaires. Then the patient's oral cavity is examined. Then anamnesis is collected followed by X-ray diagnostic measures: OPTG, TRP, CT. After obtaining diagnostic patterns, the diagnostic models of jaws are manufactured and marked for better positioning of braces on the teeth surface. After functional diagnostic measures and diagnostic functional tests, an orthodontic treatment plan is determined and equipment is selected (braces, arcs, ligature, etc.).

Immediate fixation of braces includes the following steps:
- Professional oral hygiene, which includes cleaning of the vestibular teeth surface for fixation of vestibular braces. The patient's oral cavity should be fully sanitized;
- Installation of a retractor (lip restrainer) to prevent contact between the teeth surface and labial and buccal mucosa;
- Isolation of the teeth surface from moisture (with cotton wool or a saliva ejector nozzle);
- Washing the teeth surface from moisture with a jet of water from the dry instrument;
- Drying the teeth surface from moisture with air from the dry instrument;
- Etching of the teeth surface during 20-40 seconds though the application of 37% solution of orthophosphoric acid on the vestibular surface of the teeth intended for fixation of the brace with a disposable brush (or a syringe with a special disposable cannula);
- Washing teeth for fixation from orthophosphoric acid with a jet of water from a dry instrument for at least one minute;
- Replacement of cotton rolls in the oral cavity to isolate the teeth surface intended for fixation from moisture;
- Drying the teeth surface intended for fixation from moisture with air from a dry instrument;
- Application of the bonding system to the vestibular surface of teeth, to the intended place of brace fixation using a disposable brush;
- Inflation of the bonding system with air from a dry instrument;
- Illumination of the bonding system (using a polymerizing lamp) on the teeth surface intended for fixation during 10 seconds for each tooth;
- Application of light-reflecting fixing material (possibly together with a bonding system, depending on the fixing material) on the brace surface intended for fixation to the tooth;
- Positioning of the brace on the tooth surface using a positioner (focusing on the middle height of the clinical crown and on the middle axis of the tooth), pressing the brace to the tooth surface, removing the remaining fixing material with the tool and illuminating each brace for 40 seconds (using a polymerizing lamp) on each tooth;
- Selection, overlay and fixation of the orthodontic arc in the brace slots using elastic ligature/metal ligature or locks of self-ligating braces, while the arc originally installed in slots is four-sided;
- Elimination (cutting off with a distal end cutter) of arc tips behind the last (back) braces, if they are present.

The installed arc can have a square or rectangular section. The arc load should be equal to and not exceed 80 grams per tooth. This condition can be fulfilled if the load is marked on the arc. Torque can be realized only if there are contact points between edges of the arc (square or rectangular) with walls of the brace slot.

In the case of light or medium teeth crowding, the place deficit of 2-6 mm, an original arc with a rectangular section 0.016×0.022" and a load of 80 grams per tooth is used.

In the case of severe and very severe teeth crowding, the place deficit of 7-10 mm, an original arc with a rectangular section 0.016×0.016" and a load of 80 grams per tooth is used.

The ligation (binding) and fixation of the arc in brace slots prevent shifting of the arc relative to braces and sealing in brace slots in order to implement all characteristics of the brace slots.

The entire period of treatment is accompanied by routine examinations of the patient.

### Industrial applicability

### Example 1.

Patient K., 14 years old, applied to the clinic with complaints of an aesthetic defect.

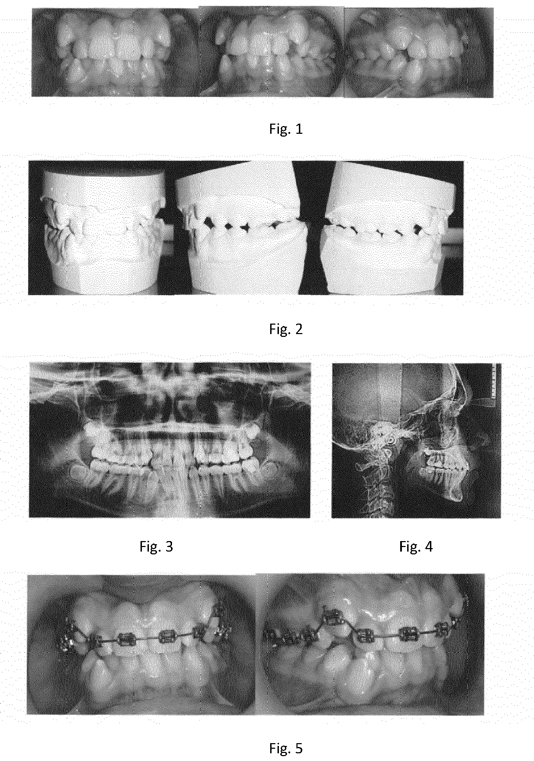

The examination of the patient's oral cavity (see Fig. 1) and the analysis of plaster models of jaws (see Fig. 2) allowed making an orthodontic diagnosis:
- Joining of the lateral teeth group on the right - 1st class, on the left - 2nd class;
- Deep transverse occlusion (cosmetic center shift by 3 mm);
- Narrowing and shortening of the upper and lower jaws;
- Crowding of teeth of the upper and lower jaw, misalignment of dental rows;
- Supra, vestibular position of teeth 13 and 23, infra-, vestibular position of tooth 43, vestibular position of tooth 33.
- Neutral growth type (see Fig. 1).

Also, orthopantomography was made in order to assess the condition of bone tissue, teeth, the presence of nidi (see Fig. 3), as well as teleroentgenography of the head in lateral projection (see Fig. 4).

After the diagnostic measures, it was decided to treat the patient using braces without removing complete teeth (premolars).

In order to do this, namely, to put all teeth in dental rows without removing them, it was decided to use four-sided arcs of weak load installed in the brace slots from the very beginning of the treatment process.

Ligated braces were fixed on the vestibular surface of teeth, in a standard way, at the standard height (slot 22, Roth prescription). A four-sided arc BIO-EDGE (GCO, Japan) of weak load (80 grams) with a section of 0.016×0.022" was installed from the beginning of treatment (see Fig. 5).

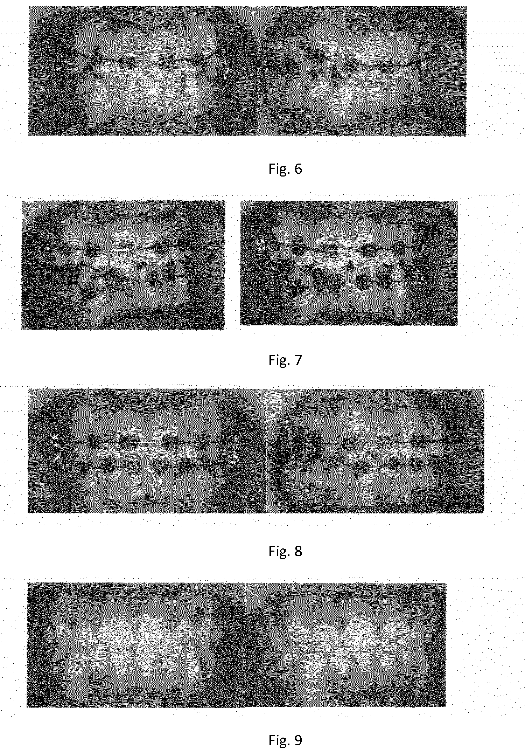

A month later, the position of teeth on the upper jaw improved (see Fig. 6).

Then, after 3 months, braces were fixed on the lower jaw (the same characteristics). The arc on the upper jaw did not change, a four-sided arc BIO-EDG (GCO, Japan) of weak load (80 grams) and a section 0.016×0.022" was installed on the lower jaw (see Fig. 7).

The location of teeth, the shape of the dental rows, and occlusion significantly improved after nine months from the treatment start. The arcs were changed to 0.017×0.025, 160 grams BIO-EDGE (GCO, Japan) on the upper and lower jaws (see Fig. 8). After 14 months, the teeth occupied the correct position in the dental rows, the shape of dental rows and occlusion were normalized. The braces were removed. Active orthodontic treatment was over (see Fig. 8).

Control orthopantomography was performed. There were no defects in the bone and teeth structure (see Fig. 9).

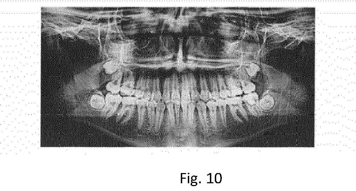

Control orthopantomography after orthodontic treatment is shown in Fig. 10.

Thus, the use of four-sided arcs BIO-EDGE (GCO, Japan) of weak load (80 grams) from the beginning of orthodontic treatment allowed conducting high-quality orthodontic treatment without removing complete teeth (premolars) and without the occurrence of the most common complications: gum recessions, resorption of root and bone tissue during movement of teeth using loads of various orthodontic arcs.

### Example 2

Patient M., 14 years old, applied to the clinic with complaints of an aesthetic defect.

The examination of the patient's oral cavity (see Fig. 1) and the analysis of plaster jaw models (see Fig. 2) allowed making a diagnosis:
- Joining of first molars on the right and left, 2nd class;
- Distal occlusion, retrusion of the lower jaw;
- Transversal occlusion (displacement of the cosmetic center by 3 mm);
- Narrowing and shortening of the upper and lower jaws;
- Overcrowding of teeth in the upper and lower jaws, misalignment of dental rows;
- Teeth retention 13 and 23.
Also, orthopantomography of dental rows was made in order to assess the condition of bone tissue, teeth, the presence of nidi (see Fig. 3).

After the diagnostic measures, it was decided to treat the patient using braces with the creation of a place for impactions 13 and 23 and without removing premolars in the upper jaw.

In order to do this, namely, to put all teeth in dental rows, to normalize the shape and size of the dental rows and occlusion, it was decided to use four-sided arcs of weak load installed in the brace slots from the very beginning of treatment process.

Ligated (external) metal braces were fixed on the vestibular surface of teeth, in a standard way, at the standard height (slot 22, Roth prescription). A four-sided arc BIO-EDGE (GCO, Japan) of weak load (80 grams) with a section 0.016×0.022" was installed together with open springs at 13 and 23 from the beginning of treatment (see Fig. 4)

The location of teeth in the upper and lower jaws improved and space for teeth 13 and 23 began to form after nine months from the treatment start.

After 6 months, ligated metal braces (slot 22, Roth prescription) were fixed on the lower jaw. A four-sided arc BIO-EDG (GCO, Japan) of weak load (80 grams) and a section 0.016×0.022" was installed from the treatment start (see Fig. 6). There was a self-eruption of impacted tooth 23. The arc on the upper jaw did not change.

The location of teeth, the shape of the dental rows, and occlusion significantly improved after eight months from the treatment start. The arcs were changed to 0.018x0.025, 200 grams BIO-EDGE (GCO, Japan) on the upper and lower jaws (see Fig. 7).

After 14 months, the teeth occupied the correct position in the dental rows, the shape of dental rows and occlusion were normalized. The braces were removed (see Fig. 8). Active orthodontic treatment was over.

There were also significant improvements in diagnostic plaster models (see Fig. 9) and the patient's face (see Fig. 10).

Control orthopantomography was performed. There were no defects in the bone and teeth structure after orthodontic treatment (see Fig. 9). Control orthopantomography after orthodontic treatment is shown in Fig. 10.

Thus, the proposed invention allows improving the effectiveness and quality of orthodontic treatment, reducing the time of treatment, preventing all sorts of complications during orthodontic treatment associated with an uncontrolled load applied to the teeth during their movement on non-removable orthodontic equipment (brace system).

### References:

1. Patent RU No. 2561293, 2015.
2. Persin L.S. Orthodontia, Modern Methods for Diagnostics of Dentofacial Abnormalities. Moscow, 2007, pp. 115-116, 126.

## Claims

1. The method of orthodontic treatment of dentofacial abnormalities using braces begins with an examination of the patient and the choice of a treatment strategy depending on the orthodontic pathology using vestibular nitinol arcs with a square and rectangular section of certain sizes installed in the slots. These slots are fixed on the vestibular surface of teeth in the upper and lower jaws. The method includes leveling and vertical and horizontal alignment of teeth. The choice of the treatment strategy depending on the severity of orthodontic pathology is based on the analysis of orthopantomography (OPTG), teleroentgenography (TRG), and computer tomography (CT). It determines the number of braces taking into account the size of the slot and the shape of the orthodontic arc. Then braces are pre-installed and fixed on the patient's dental rows followed by the installation of an orthodontic arc. The arc originally installed in the brace slot is four-sided in compliance with the specified load of the arc, which should be equal to and not exceed 80 grams per tooth. In the case of light or medium crowding of teeth, where space deficit is from 2 to 6 mm, the original arc with rectangular section 0.016×0.022" and load 80 grams/tooth is used. In case of severe and very severe crowding, when space deficit is 7 to 10 mm, the original arc with square section 0.016×0.016" with load 80 grams/tooth is used, while during the first month the arc is fixed in brace slots by elastic ligatures with subsequent replacement of elastic ligatures to metal. The first arc change should be made only after 7-9 months followed by an increase in the arc section from 0.018×0.018 to 0.021×0.028 and an increase in the load from 100 to 300 grams depending on the severity of the pathology in the current treatment stage.

2. The method of claim 1 distinguished by the fact that the fixation of braces comes after etching of the surface of the teeth intended for fixation through the application of 37% solution of orthophosphoric acid on the vestibular surface of teeth and the place intended for fixation of the braces with exposure 20-40 seconds.

3. The method of claim 2 distinguished by the fact that after installation and fixation of the braces on dental rows of the patient, the remaining fixing material is removed using a tool with the illumination of each brace for 40 seconds with the help of a polymerizing lamp.
